Europäisches Patentamt

European Patent Office

Office européen des brevets

(11) Publication number: **0 485 676 A1**

# EUROPEAN PATENT APPLICATION

(21) Application number: **90403361.0**

(22) Date of filing: **27.11.90**

(51) Int. Cl.5: **F02B 19/12**

(30) Priority: **13.11.90 US 611916**

(43) Date of publication of application:
**20.05.92 Bulletin 92/21**

(84) Designated Contracting States:
**DE FR IT**

(71) Applicant: **Cherry, Mark Alan**
**965A Jamacha Road**
**Elcajon, California 92019(US)**

(72) Inventor: **Cherry, Mark Alan**
**965A Jamacha Road**
**Elcajon, California 92019(US)**

(74) Representative: **Rinuy, Santarelli**
**14, avenue de la Grande Armée**
**F-75017 Paris(FR)**

(54) Catalytic-compression timed ignition method and igniter therefor.

(57) A catalytic prereaction timing ignition method and igniter unit for timed ignition of a fuel-air mixture in internal combustion engines providing an ignition chamber open into the combustion chamber of the engine, there being a catalytic ignited positioned in the ignition chamber to intercept a pressure front of stratified fuel-air mixture penetrating a prechamber timing zone of the ignition chamber and controlled by the spring rate of burnt gases captured in a buffer zone of the ignition chamber during the compression cycle and ignited by the pressure front touching the igniter to effect the power stroke of the engine.

Rank Xerox (UK) Business Services
(-/2.19/2.0)

Internal combustion engines employ the Otto spark ignition cycle and the Carnot compression ignition cycle, in the engines of the type under consideration. These distinct engine cycles are carried out in various forms of engines which are recognized conventionally as either two-cycle or four-cycle, including reciprocating as well as rotary engines. This invention is particularly concerned with the prior art spark ignition Otto cycle engine which employs compression to heat a combustible admixture of gas and air, with ignition thereof by a timed spark heretofore produced by a high tension electrical system and with commutation to the multiplicity of spark plugs involved; and employing step-up coils, condensers and breaker points, all combined in a complex system using both low and extremely high voltage electricity. Thus, the prior art has resorted to complex and expensive means so as to cause timed ignition and burning of gases and/or atomized fuels, in this type of widely accepted heat engines. Therefore, it is a general object of this invention to entirely eliminate the complications of high tension spark ignition in Otto cycle engines, and to replace the same with a greatly simplified and much more practical Timing Chamber Ignition.

The ignition system herein disclosed is universally applicable to internal combustion Otto cycle engines of all types. That is, this ignition system is operable in carbureted or atomized fuel injected Otto cycle engines, regardless of the type of fuel employed, providing a stoichiometric ratio of fuel to air exists to support combustion. Therefore, it is a primary object of this invention to provide a method and apparatus for timed ignition of internal combustion engines by providing pressure responsive means to ignite the fuel-air mixture with inherently correct results, and eliminating the conventional high tension spark ignition with its advance and retard system of breaker points. The method of ignition herein disclosed can be practiced in any reciprocating or rotary type engine presently used, simply by replacing the spark plugs and by removing the present high tension commutated spark generating system. The method herein disclosed involves response to the compression of the fuel-air mixture in the engine combustion chamber, which normally occurs before top dead center of the engine crank motion, by transferring a pressure front from said compression mixture and into a closed chamber that is in open communication with the combustion chamber, and by positioning an igniter means in the closed chamber for contact with the said compression mixture for its ignition.

With this invention, there is progressive movement of the pressure front into the closed chamber, preferably an elongated ignition chamber that is penetrated by the pressure front to the position of the igniter means. At this pressure front level and/or position within the closed chamber, ignition occurs and continues in the usual manner. The results herein disclosed differ from prior art glow plug technology in that the normal use of a glow plug does not provide any timing whatsoever. The advancement of the ignition time in this invention is automatically controlled by the density of the charge. During idle the throttle is nearly closed and a very high vacuum exists in the intake system of the engine, and thus the density in the combustion chamber is correspondingly low, so that the fuel-air mixture reaches the igniter means later in time. However, during open throttle conditions the charge is at greater density and the fuel-air mixture reaches the igniter means sooner in time. It is to be understood that the time at which the igniter means is reached by the pressure front relates to the dynamic position of the crank shaft, or equivalent, with respect to its top dead center position and transition into power cycle or stroke of the engine.

It is another object of this invention to advantageously employ a gas spring effect which is inherent with gases captured in an air space. Heretofore, glow plugs and the like have simply been exposed to gases within the combustion chamber of the engine, devoid of timing control of any kind. However, with the present invention the elasticity of the gazes in an ignition chamber functions as a spring which controls the penetration of the pressure front of compressed mixture from the combustion chamber and into the ignition chamber. In practice, the ignition chamber is of a configuration whereby igniter means is positioned therein with respect to the response of the air spring to said pressure front, and so that movement of the pressure front into contact with the igniter means occurs when ignition is required. As will be described, the ignition chamber is comprised of a timing zone open to the combustion chamber, and a buffer zone fixed or adjusted as to displacement in order to provide the required gas spring effect. When ignition occurs, all combustible gases within the timing zone as well as within the buffer zone are burned, and continuing into the combustible mixture compressed within the combustion chamber.

It is still another object of this invention to advantageously employ a gas shield effect which is inherent with the presence of previously burnt gases in the ignition chamber as they are controlled by the aforesaid gas spring effect. With the present invention, reduced combustion chamber pressure during the engine intake cycle or stroke causes extension of the said gas spring and thereby occludes the igniter means with non combustible gases. The occlusion precludes ignition of the combustible gas-air intake mixture. However, when compression occurs in the combustion chamber, the pressure front therefrom enters through the passageway and into the timing zone of the ignition chamber where it continues to move toward the igniter means as compression increases. Accordingly, the pressure front establishes a boundary layer between burnt gases in the captured air space of the buffer zone and the combustible gases progressively penetrating the timing zone to subsequently contact the igniter means positioned therein at the point of ignition. The point of ignition is thereby precisely operative according to the air spring's predetermined response to the pressure conditions within the combustion chamber of the engine.

With this invention, there is progressive movement of the pressure front into the closed chamber, preferably an elongated ignition chamber that is penetrated by the pressure front to the position of the igniter means. At this pressure front level and/or position within the closed chamber, ignition occurs and continues in the usual manner, it being an object of this invention to control pressure front penetration by changing or varying the spring rate of the buffer zone. Volume of the buffer zone is a primary factor that determines pressure front penetration, and the cross sectional area along the buffer zone is a controlling factor. In practice, the buffer zone is a continuation of the timing zone and is basically of a fixed volume. The gas spring formed thereby has the elastic effect of the gas or gases that are compressed, these gases responding according to their displacement ahead of the penetrating pressure front. Therefore, the cross sectional area of the timing zone (also of the buffer zone) is varied as by being tapered so as to augment or to diminish the spring rate as may be required. It is also an object of this invention to vary timing chamber volume by valve means, for example by a solenoid operated valve means.

This Timing Chamber Igniter unit as it is disclosed herein is conducive to operation with lean fuel-air mixtures, which heretofore have been regarded as unworkable. That is, the conventional stoichiometric ratio can be reduced from the usual 14 to 1 ratio to a farleaner mixture and far less fuel oxidized, and which otherwise would destroy conventional spark plugs. With the present invention however, the penetrating stratified pressure front of leaner mixtures touches the igniter means heater and following which flame torch progression is toward and emanates into the engine combustion chamber. In accordance with this invention, the igniter means heater is fabricated of a noble metal having catalytic properties such as Platinum, Palladium or Rhodium. These catalysts speed up and enhance the chemical oxidation process of burning the fuel-air mixture without consuming themselves, which ensures a long Igniter life. However, the use of such noble metal for the heater does not preclude the use of less expensive materials such a Nickel Chrome wire and the like, when requirements permit.

As thus far described it will be observed that this invention involves a Dynamic Timing Catalytic Ignition (DTCI) system, devoid of the conventional spark ignition. Accordingly, it is an object of this invention to provide prechamber catalytic enhancement of the combustible mixture combined with compression timed ignition, inherently devoid of other mechanical or electrical timing means.

It is and object of this invention to intensify instantaneous ignition by means of a compression responsive Igniter. To this end a catalytic prechamber is employed in combination with a compression responsive timing chamber. A feature is a timing chamber wherein a catalyst is placed so as to enhance the gas ignition phase and burning of the remaining mixture in the engine combustion chamber. This is accomplished by a powerful flame torch which emanates from the timing prechamber. Heretofore, catalytic prechambers have been unable to time ignition per se, so that Otto cycle engines have relied upon spark ignition, and Diesel cycle engines have relied upon timed fuel injection. However, the catalytic prechamber concept has advantages and is compatible with the Timing Chamber Ignition concept of my aforesaid Patent N° 4, 977, 873. Accordingly, the timing chamber herein disclosed includes prechamber features in the form of a catalytic element of noble metal over or through which the stratified combustible mixture pressure front penetrates on its excursion to the igniter means. Again, the igniter means is a heater preferably of a noble metal as above specified, preferably Platinum.

The catalytic ignition concept is suited to the ignition of conventional and presently available premixed high octane fuels. A high temperature, homogeneous charge environment consisting of gasoline and air is naturally well suited to in-cylinder catalytic treatment and a catalytic prechamber is attractive from the standpoint of controlling all phases of in-cylinder combustion. Such a prechamber influences both chemical and gas dynamic processes; it regulates contact between the fresh charge and the catalytic element; it allows activation to take place in a well defined volume open to the igniter means; it provides means to control catalytic surface temperature; and it intensifies burning of the non-activated portions of the mixture.

To understand the potential of catalytic activation as a means of enhancing gas phase combustion requires understanding the roles of species and thermal activation. This distinction is complicated by the fact that hot products leaving the catalytic surface promote homogeneous production of the same chain-branching species that might be attributed to species activation. The theory of catalytically assisted homogeneous combustion framed here is based on thermal activation principles. Catalytic combustion can be modeled as two distinct processes. The first is catalytic surface reaction and the ensuing diffusion of radicals as well as heat into the homogeneous phase. The second is the effect of these reaction by-products on the combustive properties of a gaseous hydrocarbon mixture. In as much as catalytic reaction is mass transfer limited, surface reaction rates can be estimated by well established mass transfer correlations. As to the effect of thermal activation, heterogeneous catalysis is unique in its ability to selectively oxidize hydrocarbon mixtures to final reaction products and to thermally activate the remaining charge in the surrounding gas phase. Note that in non-catalytic systems it is nearly impossible to bring about controlled prereaction. Empirical observation has shown that thermal activation by catalytic prereaction will provide a twofold increase in flame velocity and a 50% reduction in ignition energy requirements, when observed under reasonably adiabatic conditions. Even with a 50% heat loss, flame velocities are 25% higher than with no catalytic prereaction. Thus, thermal activation by heterogeneous catalysis bolsters the laminar flame velocity and reduces the required ignition energy and is most useful.

It is an object of this invention to concentrate the effects of catalysis in a relatively small volume timing prechamber responsive to a stratified pressure front of combustible mixture. The timing prechamber serves to activate only a small portion of the total mixture under compression. Ignition and burning of the total mixture is achieved by a powerful flame torch which emanates at the igniter means heater and from the timing prechamber opening into the combustion chamber. This gas dynamic function brings about complete combustion of the total mixture including the unactivated portion thereof.

Heat dissipation is a factor to be considered in the manufacture of this Igniter unit, much the same as is the heat range control a major consideration in the spark plug art. That is, the deciding factor in the choice of proper spark plugs is the thermal value, which is controlled by the ceramic insulator design and its relation to the metallic body threaded into the combustion chamber of the engine. Although the Igniter unit of the present invention is not subject to critical spark gap problems, ignition temperature is of some concern so that pre-ignition will not occur. To this end the igniter means of the present invention is thermally isolated from the surrounding structure of the timing chamber, and the timing chamber passage is comprised of a structure that is isolated from the body of the unit. In practice, the timing prechamber and passage structure is a heat isolating insulator of ceramic material that also dissipates heat. As a result, passage temperature is held below 600°F for example, while igniter means temperature ranges from 1000° to 2000°F. Accordingly, it is an object of this invention to control internal heat conditions and to dissipate heat absorbed from the combustion process, so as to preclude pre-ignition and to ensure the timed ignition which is inherent with the use of this timing prechamber and igniter means. Another feature of this invention is the heat insulating dielectric rod that carries the igniter means heater, an object being to isolate this heater from the surrounding unit structure.

The invention teaches a method of ignition in internal combustion engines having a compression cycle and ignition of a combustible fuel-air mixture in a combustion chamber followed by a power cycle, and including;

the first step of providing a closed chamber in open communication with the combustion chamber for penetration therein of a pressure front of the combustible fuel-air mixture,

the second step of positioning an igniter means at a depth of pressure front penetration of said combustible fuel-air mixture into the closed chamber for contact therewith at a determined compression of said combustible fuel-air mixture,

the third step of transferring the pressure front of combustible fuel-air mixture from the combustion chamber and into the closed chamber during the compression cycle,

the fourth step of capturing a volume of previously burnt non combustible gases in the closed chamber for occlusion of the igniter means and for depression as a spring,

and the fifth step of depressing said captured previously burnt non combustible gases with the penetrating pressure front of combustible fuel-air mixture until contact thereof with the igniter means, whereby ignition occurs and is transferred into the combustion chamber for continued burning to effect the power cycle and leaving burnt non combustible gases in the closed chamber.

The invention further teaches a timing chamber ignition unit for an internal combustion engine having a combustion chamber with an opening replaceably receiving said ignition unit, means for intake of a combustible fuel-air mixture, means for effecting a compression cycle followed by a power cycle, and means for exhaust of burnt gases, said ignition unit including;

a body secured to the engine and with an elongated ignition chamber comprised of a timing zone with an entry passage in open communication with the combustion chamber and a buffer zone continuing from the timing zone and with a closed end to capture the burnt gases therein,

igniter means carried by the body and exposed within the ignition chamber between said entry passage and said closed end for ignition of a pressure front of said combustible fuel-air mixture penetrating into the ignition chamber during the compression cycle,

the ignition chamber being closed by said end to capture burnt gases therein so as to function as a spring opposed to the pressure front of said combustible fuel-air mixture,

whereby burnt gases occlude the igniter means until exposed to the penetrating pressure front of combustible fuel-air mixture for contact with said igniter means and ignition thereof and transfer of ignition into the combustion chamber to effect the power cycle.

The invention further teaches an igniter for timing chamber ignition in internal combustion engines having a combustion chamber, means for intake of a combustible fuel-air mixture, means for effecting a compression cycle followed by a power cycle, and means for exhaust of burnt gases, and including;

an elongated ignition chamber means comprised of a ceramic of tubular cross section carried by a body adapted to the engine combustion chamber and having a timing zone with an entry passage in open communication with the combustion chamber and a buffer zone continuing from the timing zone and with a closed end to capture gases therein,

igniter means comprised of a rod carried by the closed end of the ignition chamber means and having a heater element exposed within the ignition chamber means between said entry passage and said closed end for ignition of a stratified pressure front of said combustible fuel-air mixture penetrating into the ignition chamber during the compression cycle,

the ignition chamber means being closed by said end to capture burnt gases therein so as to function as a spring opposed to the pressure front of said combustible fuel-air mixture,

whereby burnt gases occlude the heater element until contacted by the penetrating stratified pressure front of combustible fuel-air mixture for ignition thereof and transfer of a flame into the combustion chamber to effect the power cycle.

SUMMARY OF THE INVENTION :

This invention relates to timed ignition of fuel-air mixtures in internal combustion engines, without the use of commutated high tension spark ignition systems. A characteristic feature of this inventive concept is the employment of a separate timing chamber and igniter means exposed therein, and all of which is in open communication with the combustion chamber of the engine. That is, a passageway enters the engine combustion chamber where a spark plug would normally be positioned for best performance. The passageway openly communicates into a closed timing chamber into which a compressed fuel-air mixture pressure front penetrates during the compression cycle of the engine, there being igniter means at a level or pressure front position corresponding to the corresponding point at which the ignition is required for optimum engine performance. It is to be understood that the timing chamber displacement is adjusted and/or controlled for particular engine performance, so that optimum ignition timing is established therefor. A feature is the response of the igniter means in the timing zone of the ignition chamber, to the fuel-air density as a result of throttle conditions. There is an unobvious gas spring effect and gas shield effect controlled thereby, to preclude pre-ignition while inherently timing ignition in response to pressure conditions within the combustion chamber. Accordingly, this Timing Chamber Ignition Method and Apparatus automatically adjusts to engine operating conditions. In practice, the igniter means is a heated element such as a glow plug or the like positioned in the entry zone at a position where ignition of the stratified pressure front is to occur, the igniter means being electrically energized with a suitable low vehicle voltage. As shown, this Timing Chamber Ignition is incorporated in a component or unit that replaces a spark plug. However, permanent features thereof can or will be incorporated in the engine structure as may be desired, with parts subject to deterioration made replaceable as circumstances require.

The foregoing and various other objects and features of this invention will be apparent and fully understood from the following detailed description of the typical preferred forms and applications thereof, throughout which description reference is made to the accompanying drawings.

THE DRAWINGS :

Fig. 1 is a diagrammatic view of a typical internal combustion engine cross section, showing the pressure responsive ignition apparatus incorporated therein, with the crank shaft and piston shown in the compression cycle before top dead center position of the crank shaft and approximately at the normal position and condition at which ignition is to take place.

Fig. 2 is an enlarged longitudinal cross sectional view showing the apparatus of the present invention in a component or unit form, with a plug for fine tuning of the engine performance, and utilizing a glow plug as an igniter means,

Fig. 3 is a second embodiment, similar to Fig. 1, showing the igniter means adjustable to different pressure front positions for fine tuning of engine performance.

Fig. 4 is a schematic diagram illustrating the Timing Chamber Ignition as it is combined with a carbureted Otto cycle engine.

Fig. 5 is a schematic diagram illustrating the Timing Chamber Ignition as it is combined with a fuel injected Otto cycle engine.

Fig. 6 is a vertical cross sectional view showing the Igniter of the present invention as a plug component of unit form.

Fig. 7 is an enlarged elevation of the igniter means removed from the chamber structure, portions thereof broken away in section.

Fig. 8 is an exploded view of the electrical connections to the igniter means.

Fig. 9 is a sectional view taken as indicated by line 9-9 on Fig. 7.

Fig. 10 is a view similar to Fig. 6, and shows an embodiment wherein the timing prechamber is tapered to control a buffer zone thereof.

And, Fig. 11 is an embodiment wherein the buffer zone is controlled by solenoid means to alter the compression response of the buffer means.

This invention provides a method of catalytic prereaction compression timed internal combustion engine ignition, without the use of conventional high tension spark ignition and its complexities. This method comprises a first step of providing a closed ignition chamber with a timing prechamber zone exposing a catalyst and having an entry passage from the combustion chamber of the engine and with a buffer zone in open communication with the timing prechamber zone and extending away from the entry passage; a second step of exposing an igniter means at a position where the timing prechamber zone and buffer zone are in open communication; a third step of transferring a stratified pressure front comprised of a combustible fuel-air mixture from the combustion chamber of the engine and through the entry passage so as to penetrate through the timing prechamber zone for prereaction during the compression cycle of the engine; a fourth step of capturing a determined volume of gases in the buffer zone as an elastic medium to react in equilibrium with the pressure of gases in the combustion chamber, as a spring; and the fifth step of depressing the captured buffer zone gases with the penetrating pressure front of stratified prereactive combustible fuel-air mixture for contact thereof with the igniter means; whereby ignition of the stratified prereactive combustible fuel-air mixture is initiated by and at the igniter means and emanates as an intensified torch flame from the timing prechamber and into the combustion chamber of the engine to effect the power cycle thereof.

This method is performed during the operation of Otto cycle engines, most common of such engines being the gasoline engine having a piston moving with a crank shaft to compress an inducted fuel-air mixture into a closed combustion chamber. Retraction of the piston during the intake cycle causes a partial vacuum that is reversed to positive pressure progressively increasing during the compression cycle, whereby a stratified compression front is increased to a peak compression.

The first step of providing the closed ignition chamber exposes the fuel-air mixture within the combustion chamber to a separate closed and elongated chamber, whereby the stratified pressure front of combustible fuel-air mixture progressively penetrates the entry passage and into and through the timing prechamber zone of the igniter chamber. In accordance with this method, the prereaction catalyst is exposed within the timing prechamber ahead of the igniter means placement, preferably a deposit of or lining of noble metal such as Platinum or the like, maintained at a temperature substantially less than the ignition point of the fuel-air mixture. For example, at about 1000°F less than the ignition point, or at about 800°F. In practice, the volume of the ignition chamber is fixed or variable, as will be described.

The second step of exposing the igniter means involves the placement thereof in the form of a heater at a determined depth of penetration into the ignition chamber timing prechamber zone. The required placement can be empirically determined and carried out by observation and experience, and is performed by positioning a heater element, preferably of heated catalytic material, at a depth in the timing prechamber zone of the ignition chamber, to attain the engine performance desired. In accordance with this method, the igniter means or heater is placed centrally in the ignition chamber at the juncture between the timing prechamber zone and the buffer zone, preferably a filament of noble metal such as Platinum or the like maintained at or above the ignition point of the fuel-air mixture. For example, electrically energized to 1000°F to 2000°F.

The third step of transferring the stratified pressure front of combustible fuel-air mixture into the ignition chamber is preformed by providing open communication from the combustion chamber of the engine and into and through the timing prechamber zone of the ignition chamber, for exposure to the catalyst and prereactivating thereof.

The fourth step of capturing a determined volume of gases in the buffer zone of the ignition chamber involves a dead air space in which burnt gases are alternately compressed and depressed in equilibrium with gas pressure changes in the combustion chamber of the engine. Essentially therefore, the burnt gases captured in the buffer zone react as a spring of non combustible gases that occlude the igniter means when subjected to reduced pressures and thereby extended, and that alternately exposes the igniter means to the pressure front of combustible fuel-air mixture when subjected to peak compression pressures of said combustible fuel-air mixture. Accordingly, the captured buffer zone gases react as an elastic spring to control ignition timing in response to gas pressures as they prevail in the combustion chamber of the engine.

The fifth step of depressing the buffer zone gases is performed in response to the compression cycle of the engine and progresses until the stratified pressure front of the combustible fuel-air mixture reaches the igniter means heated to ignition temperature, and placed and exposed according to the second step, at which time ignition of the prereactive admixture of fuel-air is instantaneous in the form of an intensified torch flame progressing centrally from the igniter means or heater and emanating through the open ignition chamber and into the engine combustion chamber to thermally activate the non-preactive portion of the compressed fuel-air mixture.

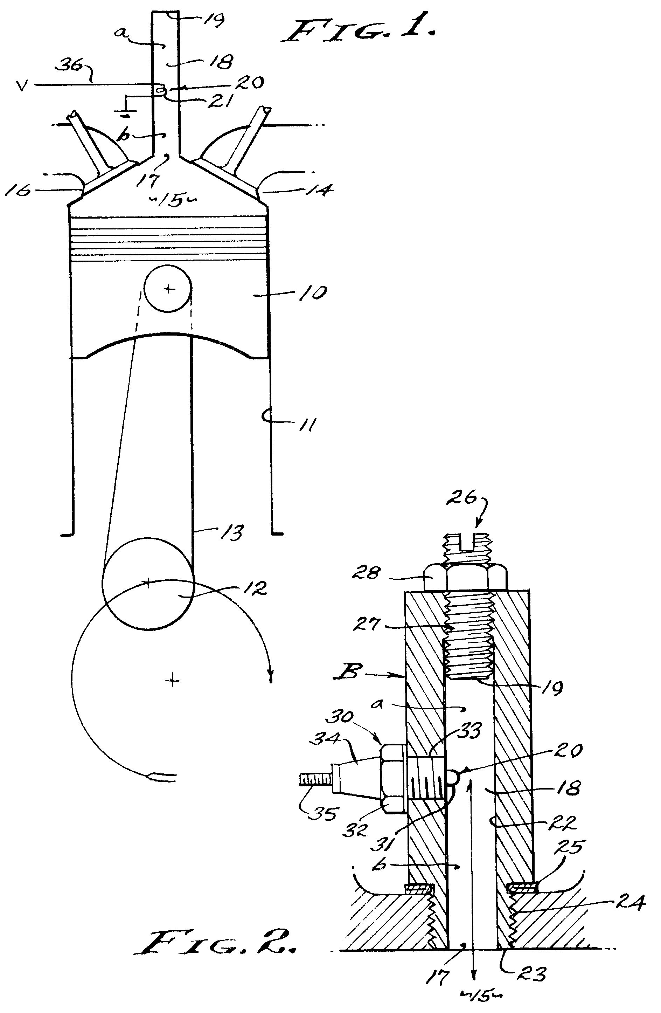

Referring now to the drawings, Fig. 1 illustrates a typical reciprocating engine having a piston 10 operating in a cylinder 11 and coupled to a crank shaft 12 by a connecting rod 13. There is an intake valve 14 into a combustion chamber 15 at the top end of the cylinder, and there is an exhaust valve 16 therefrom. A cross flow hemispherical combustion chamber is shown, with ignition at a top center position. It is to be understood that the engine example shown is for illustration purposes only, and that any such engine design, including rotary engines, can incorporate the features disclosed herein. The characteristic requirement for such an engine is means for intake of a fuel-air mixture, means for effecting a compression cycle followed by a power cycle, and means for exhaust, and that there be a fuel-air mixture compression cycle followed by a power cycle.

Referring to Fig. 1 of the drawings, an entry passage 17 opens into the combustion chamber 15 to receive the pressure front of the fuel-air mixture during the compression cycle. The size of this entry passage is relatively small, an opening of

.125 inch diameter to .375 inch diameter, which have performed well in moderate sized automotive engines. In practice, the entry passage 17 is positioned where a spark plug might otherwise occur. And, an ignition chamber 18 continues from and is in open communication with the entry passage 17, a closed chamber blind at its deepest end or top 19. In practice, the ignition chamber 18 is an elongated tube of the same size or diameter as the entry passage 17. A feature of this invention is the igniter means 20 exposed within the ignition chamber 18, and which is maintained at an ignition temperature of the fuel-air mixture to be ignited thereby, and his located intermediate the entry passage 17 and the top 19 of the ignition chamber. As shown, the igniter means 20 is a glow plug that enters the ignition chamber 18 through a side wall thereof, with its heater element 21 exposed into the ignition chamber. Electrical voltage is applied through a conductor, the body of the glow plug being grounded. A feature is that the heater element is a catalyst made of platinum or the like, so as to enhance the ignition of the pressure front of fuel-air mixture that moves into contact therewith when peak compression is reached in the combustion chamber 15.

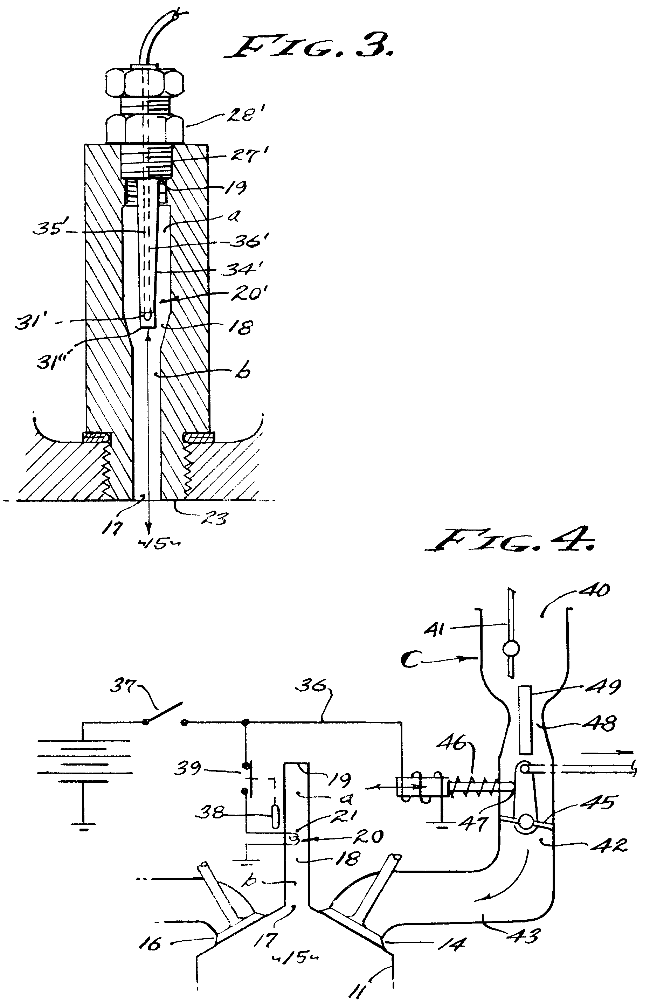

The Fig. 2 embodiment discloses a component or unit to replace the usual spark plug and is comprised of a tubular body B having the general cross section and height of the spark plug it is to replace. In its presently preferred form and application the body B is hexagonal in outside configuration, with a concentric bore 22 therethrough to form the ignition chamber 18 and the open entry passage 17 at its lower end 23. The lower end reach portion 24 is threaded for reception into the cylinder head of a usual engine, there being a compression seal 25 to prevent leakage.

A feature of the Fig. 2 embodiment is the variable volume closure means 26 at the top end of a buffer zone a. As shown, means 26 is comprised of a screw plug 27 that enters the ignition chamber 18 to adjust its length, and with a lock nut 28 to fix its height position. Accordingly, there is a captured air space in the top portion of the ignition chamber 18, to be lengthened or shortened as circumstances require, and which is adjusted and/or fixed in its effective displacement volume.

In accordance with this invention, the igniter means 20 is exposed within the ignition chamber 18 intermediate the opening of entry passage 17 into the combustion chamber 15 and its top 19, or bottom face of the screw plug 27, for example about midway therebetween. Accordingly, there is an open timing zone b extending between the entry passage 17 and the placement of the igniter means 20. The glow plug 30 is screw threaded into a side face of the body B and enters into the ignition chamber 18 where its heater element 31 projects into the ignition chamber 18 to intercept and thereby contact the pressure front of the compressed fuel-air mixture forced to enter therethrough. The glow plug 30 is replaceable and has a hexagonal body 32 with a reach 33 threaded through the side wall of the body B, and an insulator 34 for low voltage electrical conductor 35, and a wire lead 36 thereto. The wire lead 36 is controlled by an ignition switch 37 that is closed for engine operation.

A feature of the igniter means 20 is its ability to retain ignition temperature during engine operation without the need for continuous electrical energization. Accordingly, a temperature sensor 38 and control means or switch 39, suitably located, switches the voltage OFF from lead 36 when electrification is not required. In practice, the control means 39 can be remote, or it can be incorporated in the component or unit as is indicated.

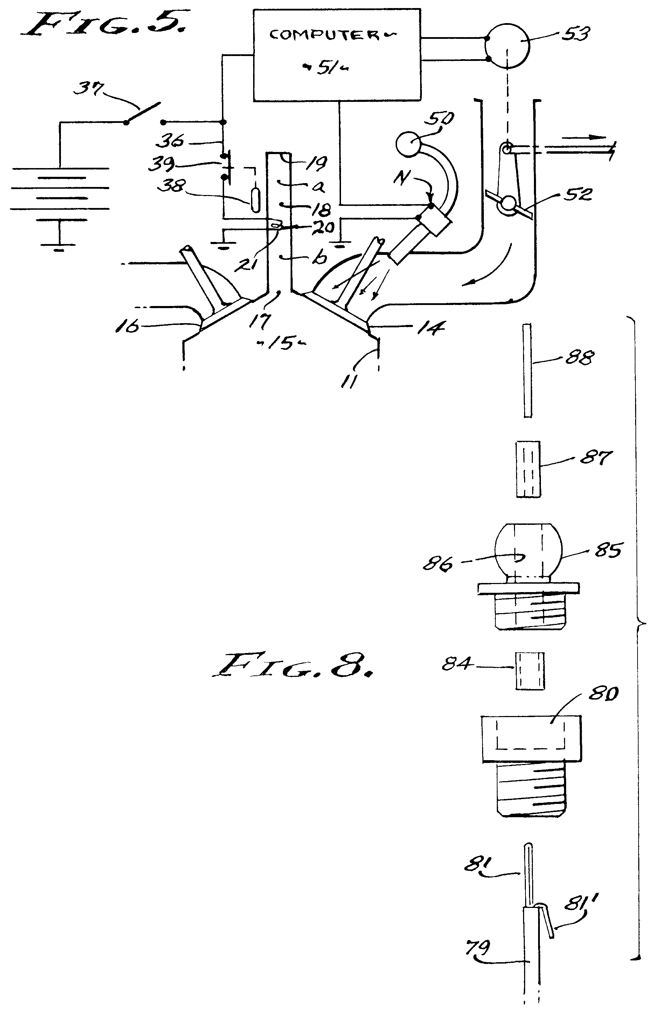

The Fig. 3 embodiment differs from that of Fig. 2 in that the igniter means 20' is adjustable as to height along with the screw plug 27'. As shown, the screw plug 27' is tubular and carries an insulator 34' in which the conductors 35' and 36' pass to the exterior for electrification. Accordingly, a resistance heater element 31' is in circuit with conductors 35' and 36' and is embraced by a heater element 31'' carried by an extension of the insulator 34'. Thus, the element 31'', preferably a catalyst, is placed below the screw plug 27' and is fixed in position by a lock nut 28'.

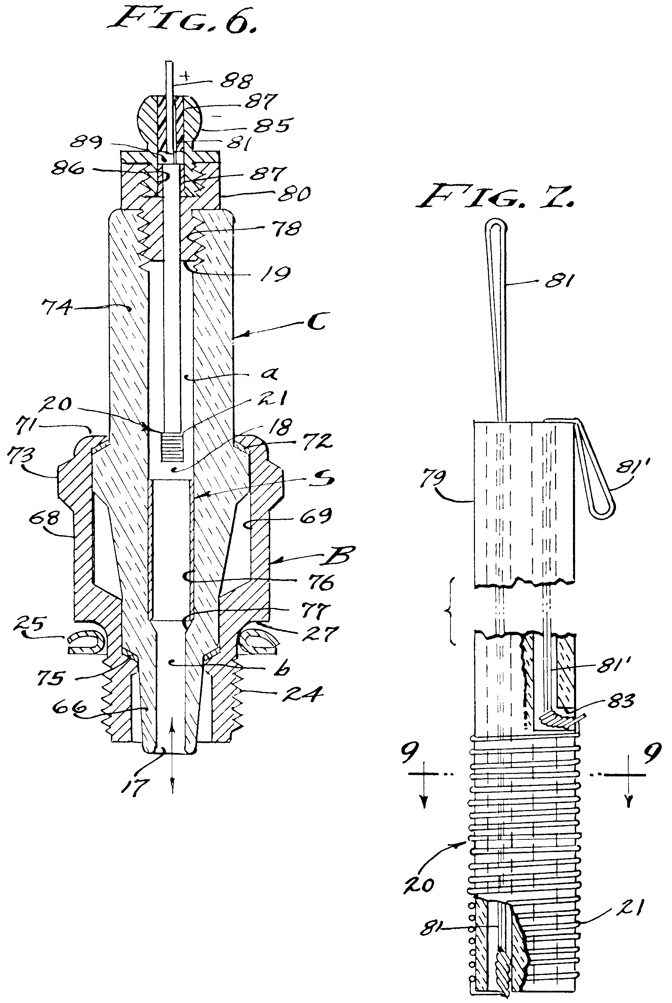

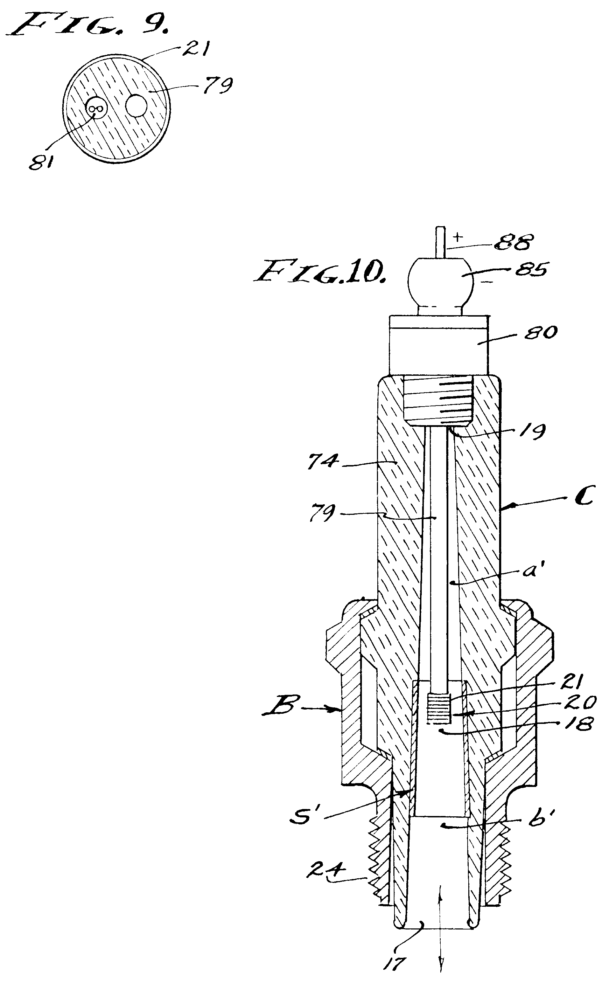

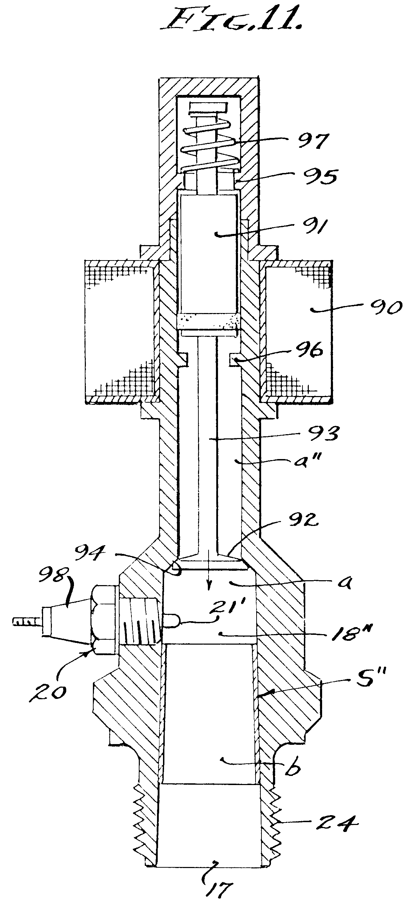

In accordance with this invention, an entry passage opens into the combustion chamber of the engine to receive the stratified pressure front of the fuel-air mixture during the compression cycle. In practice, the size of this entry passage is relatively small, preferably an opening of .125 inch diameter so as to have little effect upon the engine compression ratio, and which has performed well in moderate sized automotive engines. In practice, the entry passage 17 is positioned where a spark plug might otherwise occur. And, an ignition chamber 18 continues from and is in open communication with the entry passage 17, a closed chamber blind at its deepest end or top 19. In practice, the ignition chamber 18 is an elongated tube of smooth uniform or tapered diameter, emanating at the entry passage 17 into the engine combustion chamber. A feature of this invention is the igniter means 20 exposed within the ignition chamber 18, and which is maintained at an ignition temperature of the fuel-air mixture to be ignited thereby, and is located intermediate the entry passage 17 and the top 19 of the ignition chamber. As shown in Figs. 6 - 10 of the drawings, the igniter means 20 is a rod that enters the ignition chamber 18 through the top 19 thereof, with its heater element 21 exposed centrally within the ignition chamber. Electrical voltage is applied through at least one and preferably two conductors. A feature is that the heater element 21 is a catalyst made of Platinum or the like, so as to reactively ignite the stratified pressure front of the fuel-air mixture that moves into contact therewith when peak compression is reached or approached in the engine combustion chamber.

Referring now to Figs. 6 - 10 of the drawings, the embodiment shown has the configuration of a state of the art spark plug, so as to be a replacement thereof. Accordingly, the igniter is a unit that includes a body B having a reach section 24 threaded for reception into the cylinder head of a usual engine, there being a shoulder and a compressible seal to prevent gas leakage. And, the igniter unit also includes an elongated chamber section C extending coaxially from said body B. Although the body B and chamber section C can be integrally formed of a single metallic piece, it is preferred to form the chamber section as a separate heat controlling member, and of a configuration to control heat dissipation. In practice, heat control is my means of a ceramic chamber section C, following state of the art practice which is highly developed in the spark plug art. Accordingly, the threaded portion of the body B reach section 24 is a metallic tubular member and through which the lower tubular end 66 of the ceramic chamber section extends so as to be exposed to and open into the engine combustion chamber. The body B is characterized by a downwardly faced shoulder 67 to engage the seal 25, and has an upstanding cylinder portion 68 of tube form counterbored at 69 to receive the base 70 of the ceramic chamber section C, and over which the top periphery of the body is crimped or roll-formed onto a shoulder of the base as at 71. A pressure seal 72 is installed to seal this joint. The top periphery of the body B has a hexagonal drive portion 73 as is indicated, and the chamber section C has an upper tubular end 74 that projects upwardly from the body B. The total length of this body and chamber combination can be about two inches.

Referring now to the functional features of this igniter unit, the body B and its section 24 provide the normally required adaptation to the cylinder head of the internal combustion engine to be ignition timed thereby. The chamber section C includes and/or carries the prechamber and compression timing features now to be describe. The chamber section C is preferably pressure molded of alumina and fired with a suitable glaze, so as to have a smooth surface conducive to cleaning. However, a metallic chamber section can be employed if desired, since dielectric properties are not a primary requirement here.

The chamber section C is secured to and centered by a seal 75 in the counterbore 69, and is characterized by the ignition chamber 18 substantially coextensive therewith and open at the lower tubular end 66 and is closed at the upper tubular end 74. The total length of the ignition chamber 18 therein is about 1.75 inch and of the aforesaid .125 diameter cross section within the lower tubular portion - reach zone of body B. In practice, the chamber section C is counterbored at 76 to a slightly larger diameter, providing a step at 77 to retain a catalyst sleeve as will be described. The upper terminal end portion of the chamber section is internally threaded at 78 to receive a carrier 80 of the igniter means 20. Thus, the body of the igniter unit is comprised of one or two members and characterized by a threaded connection into the engine cylinder head and by the elongated ignition chamber 18 that opens into the combustion chamber.

Referring now to Fig. 7 - 8 of the drawings, the igniter means 20 is a rod 79 of dielectric material that carries the filament or heater element 21 at the juncture between the buffer zone a and the prechamber timing zone b. It is at this juncture that the stratified pressure front of combustible fuel-air mixture touches the heater element 21 when the engine compression is at a value for the desired, optimum, engine performance. The rod 79 is preferably pressure molded of alumina and fired so as to form a durable insulation through which conductive leads 81 and 81' extend to the heater element 21, for example a 4 in. coil of .005 inch diameter platinum wire. Such a wire is operable on 12 Volts at 2 amps. In practice, the rod 79 is .062 inch diameter with a pair of coextensive conductor holes of .064 inch diameter. The heater element 21 is carried on the lower end portion of the rod 79, the rod varying length according to the compression requirements of the engine involved. In practice, the rod will be more or less about one inch long.

The heater element 21 is shown as a coil of approximately twenty turns of .005 wire wrapped onto the lower terminal end portion of the rod 79. One conductor 81 thereto emanates from one conductor hole at the lower terminal end of the rod and continues into the coil thereof wound upwardly to an opening 83 through the side of the rod and into the other conductor hole to receive the second conductor 81' therethrough. The two conductors 81 and 81' emanate from the top terminal end of the rod in the form of separate loops or wire doubled back through their respective conductor holes in the ceramic insulating rod and run parallel to and wrapped with the conductors 81 and 81' adjacent to the resistance coil to increase the current carrying capacity thereof. Accordingly, only the coil element 21 is raised to ignition temperature of 1000° F to 2000° F, one continuous wire.

Installation of the igniter means 20 will be clear form Figs. 1 - 3 of the drawings, showing the carrier 80 through which the top end portion of the rod 79 extends, with the loop of conductor 81 projecting upwardly and with the loop of conductor 81' turned downwardly (see Fig. 8) when the carrier 40 is threaded at 78 into the chamber section C. A conductor sleeve or wrapping of foil 84 is placed over the conductor loop 81' and constricted by a terminal plug 85 threadedly engaged to the carrier (see Fig. 6). The terminal plug 85 has a bore 86 to constrict onto the conductive foil 84 and to receive an insulator sleeve 87 that carries a terminal pin 88 force fitted over the loop of conductor 81. A sealing compound or cement or the like is applied at 89. The plug and pin terminals 85 and 88 are coupled into an electrical circuit as indicated.

The embodiment shown in Fig. 6 of the drawings employs a straight cylindrical ignition chamber 18, with the step at 77 to retain a catalytic sleeve S or to accommodate a catalytic deposit, without decreasing the (.125 in.) area of the entry passage 17. A feature is that the increased (.156 in.) diameter of the counterbore 76 establishes an annulus surrounding the igniter rod 79, an annulus substantially equal in cross sectional area to the area of the passage 17. Accordingly, the ignition chamber 18 is of substantially uniform cross section, top to bottom. The catalytic sleeve or deposit S is a tubular lining of the aforesaid noble metal such as Platinum or the like that provides the prechamber function by rereacting with the stratified pressure front of combustible mixture of gases penetrating to the ignition zone. The timing prechamber zone b is in open communication with the buffer zone a and with the heater element 21 positioned coaxially within the ignition chamber 18 at the ignition zone juncture between zones a and B.

The embodiment shown in Fig. 10 of drawings differs from the embodiment of Fig. 6 in its ignition chamber 18' configuration and placement of the prechamber catalyst S'. A feature of this embodiment is the tapered shape or configuration of chamber 18', whereby the spring rate in the buffer zone a' is controlled. By gradually reducing the cross sectional area progressively toward the top 19, resistance is increased in the elastic cushion that retards the excursion of the stratified pressure front in reaching the heater element 21. In practice, capture of previously burnt gases extends to the opening of passage 17 at the lowermost end of the ignition chamber 18' (18), so that the stratified compression front of combustible fuel-air mixture begins its spring compression function as it enters the lowermost opening of passage 17. Accordingly, the continuing tapered configuration of zone a' into zone b' provides the elastic spring function coextensively of ignition chamber 18' (18).

The prechamber catalyst S' of the Fig. 5 embodiment is positioned above the passage 17 and also surrounds the vertical extent of heater element 21. Accordingly, the prereaction at reduced temperature of the aforesaid noble metal such as Platinum or the like is transformed into a full reaction combustion phase at high ignition temperature surrounding the heater element 21.

The embodiment shown in Fig. 11 of the drawings provides external control of the elastic spring function of the ignition chamber 18''. As shown, there is a secondary buffer zone a'', in addition to the above described buffer zone a (a') and timing prechamber zone b (b'). A feature is the isolation of secondary buffer zone a'' for engine operation under a first predetermined condition, and to open communication of the secondary buffer zone a'' with the aforesaid buffer zone a (a') for engine operation under a second predetermined condition. As shown, there is a solenoid comprised of a surrounding field coil 90 and an internal armature 91 shifted axially when the coil is electrically energized. A poppet valve 92 operated by a stem 93 coupled to the armature 91 engages a seat 94 that separates buffer zone a'' and a (a'). Stops 95 and 96 limit movement of the armature-stem-valve assembly, and a spring 97 normally seats the valve so as to isolate the two buffer zones. As shown, the heater element 21' is that of a glow plug 98 that enters through the side wall of the igniter at the juncture of the buffer zone a (a') with the timing prechamber b (b') lined with a catalytic sleeve or coating S''.

Operation of an engine is generally as follows: The igniter means is brought to operating temperature by applying electrical voltage thereto, after which the engine is started by a starter means in the usual manner. The voltage applied and current through the heater element is maintained until the heat of combustion is sufficient to sustain that temperature. Maneuvering, city driving and highway driving of automotive vehicles employing this system remains unchanged in every respect. The ignition is inherently self timing, as it is responsive to combustion chamber conditions that reflect engine performance. The engine is stopped by allowing the throttle plate to fully close as shown in Fig. 4, which is accomplished by idle control means that withdraws the idle setting means of the carburetor when the ignition switch is OFF. Alternately, in fuel injected engines as shown in Fig. 5, the injection system is simply deactivated. Therefore, without fuel-air mixture induction, or without fuel injection, the engine inherently ceases to operate.

Referring now to the carbureted application of this Timing Chamber Ignition as shown in Fig. 4 of the drawings, there is a carburetor C having an air intake 40 with a choke plate 41, and having a fuel air mixture outlet 42 into the engine intake manifold 43. Intermediate the intake 40 and outlet 42 there is a throttle plate 45, shown closed by a spring 46 and shiftable stop means 47. In practice, the stop means 47 is an electrical solenoid or the like energized when the ignition switch 37 is ON or closed so as to move the throttle plate 45 into an idle setting (not shown). The venturi 48 and running mixture tube 49 precede the throttle plate and provide the fuel-air mixture that enters the combustion chamber 15 through the intake valve 14 when it is opened. Accordingly, engine operation is conventional except for control over the idle setting of the throttle plate 45 by stop means 47, which may be mechanical or electrical as shown.

Referring now to the fuel injection application of this Timing Chamber Ignition as shown in Fig. 5 of the drawings, there is a fuel injector nozzle N directed through the intake valve 14, receiving liquid fuel from a pressure controlled manifold 50 supplied by a fuel pump (not shown). A computer means 51 responds to the required conditions of engine function, including position of the throttle plate 52, as by means of a potentiometer 53 or the like. Significantly, this electronic fuel injection operates according to the various state of the art embodiments thereof, without any major changes ; the same being true of mechanical fuel injection applications. However, it is to be understood that vacuum advance and retard signals from a distributor is no longer an existent function, and is therefore a factor that is eliminated from the computer programming. Accordingly, operation is conventional in every respect except for the lack of spark advance and retard which are functions no longer existent in the control system of the present invention.

From the foregoing it will be understood that the igniter means 20 is removed from the engine combustion chamber 15, while the ignition chamber 18 remains in open communication with said combustion chamber 15 to receive the compression front of combustible gases through the entry passage 17. When the compression front reaches the igniter means 20 ignition occurs, the charge of combustible gases in the combustion chamber 15 being at the same ignition-burn pressure and temperature for continued burning during the power cycle. Many advantages are realized over prior art high tension spark ignition systems. There are no moving parts to wear or to get out of order. There are no complex electrical or electronic controls. There is a reduction of emissions. There are no projections into the combustion chamber that would retain heat and cause pre-ignition or run-on. And there is less chance of a miss-fire due to lack of spark, since the igniter means retains heat and is not subject to malfunction because of dampness. Also, there are no high voltage leads or any such related equipment to maintain, low voltage power being sufficient. And with this system, high ignition temperatures are achieved without radio interference, which eliminates the need for voltage dropping suppressor wiring and resistors.

After a successful reduction to practice in a single cylinder engine, this Timing Chamber Ignition (T.C.I.) was successfully operated in a six cylinder vehicle, followed by operation in a state of the art vehicle with a 3.8 liter multiport fuel injection V6 engine. This latter installation was in a stock vehicle previously subjected to a State of California smog inspection wherein, at 2500 R.P.M., the hydrocarbons measured 26 parts per million; carbon monoxide measured 0.02; and carbon dioxide measured 14.5. After installation of this T.C.I. system hydrocarbon emission was reduced to 4 PPM; carbon monoxide to 0.01; and carbon dioxide to 12.0. Fuel efficiency remained approximately the same. Conversion to this T.C.I. method and apparatus with its two ignition chamber zones or stages is simple, since the conventional spark plugs are merely replaced with the T.C.I. units supplied with voltage current as it is normally available for the operation of all such engines and vehicles and the like associated therewith.

Having described only the typical preferred forms and applications of our invention I do not wish to be limited or restricted to the specific details herein set forth, but wish to reserve to myself any modifications or variations that may appear to those skilled in the art, as set forth within the limits of the following claims.

## Claims

1. A method of ignition in internal combustion engines having a compression cycle and ignition of a combustible fuel-air mixture in a combustion chamber followed by a power cycle, and including;

    the first step of providing a closed chamber in open communication with the combustion chamber for penetration therein of a pressure front of the combustible fuel-air mixture,

    the second step of positioning an igniter means at a depth of pressure front penetration of said combustible fuel-air mixture into the closed chamber for contact therewith at a determined compression of said combustible fuel-air mixture,

    the third step of transferring the pressure front of combustible fuel-air mixture from the combustion chamber and into the closed chamber during the compression cycle,

    the fourth step of capturing a volume of previously burnt non combustible gases in the closed chamber for occlusion of the igniter means and for depression as a spring,

    and the fifth step of depressing said captured previously burnt non combustible gases with the penetrating pressure front of combustible fuel-air mixture until contact thereof with the igniter means, whereby ignition occurs and is transferred into the combustion chamber for continued burning to effect the power cycle and leaving burnt non combustible gases in the closed chamber.

2. The method of ignition in internal combustion engines as set forth in Claim 1, wherein the first step is performed by providing a chamber timing zone in open communication with the combustion chamber and a buffer zone in open communication with the timing zone and capturing said burnt non combustible gases as a spring.

3. The method of ignition in internal combustion engines as set forth in Claim 1, wherein the second step is performed by maintaining an ignition temperature of said combustible fuel-air mixture, in the igniter means.

4. The method of ignition in internal combustion engines as set forth in Claim 2, wherein the scond step is performed by positioning the igniter means at the open communication between the timing zone and the buffer zone.

5. The method of ignition in internal combustion engines as set forth in Claim 2, wherein the third step is performed by entering the pressure front of combustible fuel-air mixture into the timing zone in equilibrium with non combustible gases therein.

6. The method of ignition in internal combustion engines as set forth in Claim 2, wherein the fourth step is performed by entering the pressure front of combustible fuel-air mixture into the timing zone in equilibrium with non combustible gases depressed thereby as a spring in the buffer zone.

7. The method of ignition in internal combustion engines as set forth in Claim 3, wherein the fifth step is performed by depressing the gases in both the timing zone and the buffer zone for entry of the pressure front of combustible fuel-air mixture and its penetration to the igniter means for ignition in response to combustion chamber pressure.

8. The method of ignition in internal combustion engines as set forth in Claim 1, wherein the first step is performed by providing a chamber timing zone in open communication with the combustion chamber and a chamber buffer zone in open communication with the timing zone and capturing said burnt non combustible gases as a spring, wherein the second step is performed by maintaining an ignition temperature of said combustible fuel-air mixture, in the igniter means, wherein the third step is performed by entering the pressure front of combustible fuel-air mixture into the timing zone in equilibrium with non combustible gases therein, wherein the fourth step is performed by depressing said captured non combustible gases as a spring, and wherein the fifth step is performed by depressing the gases in both the timing zone and the buffer zone for entry of the pressure front of combustible fuel-air mixture and its penetration to the igniter means for ignition in response to combustion chamber pressure.

9. The method of ignition in internal combustion engines as set forth in Claim 1, wherein the first step is performed by providing a chamber timing zone in open communication with the combustion chamber and a chamber buffer zone in open communication with the timing zone and capturing said burnt non combustible gases as a spring, wherein the second step is performed by positioning the igniter means at the open communication between the timing zone and the buffer zone, wherein the third and fourth steps are performed by entering the pressure front of combustible fuel-air mixture into the timing zone in equilibrium with non combustible gases depressed thereby as a spring in the buffer zone, and wherein the fifth step is performed by depressing the gases in both the timing zone and the buffer zone for entry of the pressure front of combustible fuel-air mixture and its penetration to the igniter means for ignition in response to combustion chamber pressure.

10. The method of ignition in internal combustion engines as set forth in Claim 1, wherein the second step is performed by maintaining a catalyst at ignition temperature of said combustible fuel-air mixture, in the igniter means.

11. The method of ignition in internal combustion engines as set forth in Claims 1 through 10, wherein the first step exposes the penetrating pressure front of combustible fuel-air mixture to a catalyst and prereactivates the same preparatory to the fifth step whereby enhanced ignition occurs.

12. A timing chamber ignition unit for an internal combustion engine having a combustion chamber with an opening replaceably receiving said ignition unit, means for intake of a combustible fuel-air mixture, means for effecting a compression cycle followed by a power cycle, and means for exhaust of burnt gases, said ignition unit including;

a body secured to the engine and with an elongated ignition chamber comprised of a timing zone with an entry passage in open communication with the combustion chamber and a buffer zone continuing from the timing zone and with a closed end to capture the burnt gases therein,

igniter means carried by the body and exposed within the ignition chamber between said entry passage and said closed end for ignition of a pressure front of said combustible fuel-air mixture penetrating into the ignition chamber during the compression cycle,

the ignition chamber being closed by said end to capture burnt gases therein so as to function as a spring opposed to the pressure front of said combustible fuel-air mixture,

whereby burnt gases occlude the igniter means until exposed to the penetrating pressure front of combustible fuel-air mixture for contact with said igniter means and ignition thereof and transfer of ignition into the combustion chamber to effect the power cycle.

13. The timing chamber ignition unit as set forth in Claim 12, wherein the igniter means is positioned intermediate of and exposed to both the timing zone and the continuing buffer zone of the ignition chamber.

14. The timing chamber ignition unit as set forth in Claim 12, wherein the buffer zone is in open communication with and continuing from the timing zone and closed to capture the burnt gases therein, and wherein the igniter means is positioned between the timing zone and continuing buffer zone.

15. The timing chamber ignition unit as set forth in Claim 12, wherein the ignition chamber is an elongated tube, and wherein the igniter means is exposed intermediate the open entry passage thereof into the combustion chamber and the closed top thereof.

16. The timing chamber ignition unit as set forth in Claim 12, wherein means adjusts the volume of the ignition chamber.

17. The timing chamber ignition unit as set forth in Claim 12, wherein means adjusts the volume of the buffer zone of the ignition chamber.

18. The timing chamber ignition unit as set forth in Claim 12, wherein the igniter means is a catalyst.

19. The timing chamber ignition unit as set forth in Claim 12, wherein the igniter means is a glow plug maintained at ignition temperature of said combustible fuel-air mixture.

20. The timing chamber ignition unit as set forth in Claim 12, wherein the igniter means is glow plug with a catalytic heater element maintained at ignition temperature of said combustible fuel-air mixture.

21. The timing chamber ignition unit as set forth in Claims 12 through 20, wherein the timing zone is a prechamber having a catalyst therein exposed to the penetrating pressure front of combustible fuel-air mixture and prereactivates the same in preparation for subsequent ignition.

22. An igniter for timing chamber ignition in internal combustion engines having a combustion chamber, means for intake of a combustible fuel-air mixture, means for effecting a compression cycle followed by a power cycle, and means for exhaust of burnt gases, and including;

an elongated ignition chamber means comprised of a ceramic of tubular cross section carried by a body adapted to the engine combustion chamber and having a timing zone with an entry passage in open communication with the combustion chamber and a buffer zone continuing from the timing zone and with a closed end to capture gases therein,

igniter means comprised of a rod carried by the closed end of ignition chamber means and having a heater element exposed within the ignition chamber means between said entry passage and said closed end for ignition of a stratified pressure front of said combustible fuel-air mixture penetrating into the ignition chamber during the compression cycle,

the ignition chamber means being closed by said end to capture burnt gases therein so as to function as a spring opposed to the pressure front of said combustible fuel-air mixture,

whereby burnt gases occlude the heater element until contacted by the penetrating stratified pressure front of combustible fuel-air mixture for ignition thereof and transfer of a flame into the combustion chamber to effect the power cycle.

23. The igniter for timed engine ignition as set forth in Claim 22, wherein the ignition chamber means is a ceramic heat control means of tubular cross section carried by a metallic body adapted to the engine combustion chamber.

24. The igniter for timed engine ignition as set forth in Claim 22, wherein the ignition chamber means is a ceramic heat control means of tubular cross section carried by and projecting from a metallic body screw threaded into the engine for exposure into the combustion chamber.

25. The igniter for timed engine ignition as set forth in Claim 22, wherein the igniter means rod is a ceramic insulator carrying electrical conductors from the heater element for access externally of the ignition chamber means.

26. The igniter for timed engine ignition as set forth in Claim 22, wherein the heater element is a wire wrapped onto an end portion of the rod and with conductors therefrom carried by the rod and exposed therefrom for access exteriorly of the ignition chamber means.

27. The igniter for timed engine ignition as set forth in Claim 22, wherein the heater element is a wire wrapped onto a lower end portion of the rod and with a pair of conductors therefrom carried through complementary holes extending through the rod to emanate therefrom for access externally of the ignition chamber means.

28. The igniter for timed engine ignition as set forth in Claim 22, wherein the heater element is exposed at a lower end portion of the rod with a pair of conductors emanating at a top of the rod supported by a bore through a carrier secured to the top of and closing the buffer zone, and a terminal plug secured to and carried in contact with one conductor and with a terminal pin secured in said terminal plug by an insulator and in contact with the other conductor.

29. The igniter for timed engine ignition as set forth in Claim 22, wherein the interior cross sectional area of the ignition chamber means is varied from its entry passage to its closed end, thereby controlling the spring rate of the elastic gases compressed therein.

30. The igniter for timed engine ignition as set forth in Claim 22, wherein the interior cross sectional area of the ignition chamber means is decreased from its entry passage to its closed end, thereby increasing the spring rate of the elastic gases compressed therein.

31. The igniter timed engine ignition as set forth in Claim 22, wherein external control means increases and decreases the volume of the buffer zone.

32. The compression controlled igniter for timed engine ignition as set forth in Claim 22, wherein the externally operated control means is a solenoid actuated poppet valve lifted thereby from a seat isolating the first mentioned and said secondary buffer zones.

FIG.1.

FIG.2.

FIG. 3.

FIG. 4.

FIG.5.

COMPUTER
~51~

FIG.8.

FIG.6.

FIG.7.

# FIG. 9.

# FIG. 10.

## $FIG.11.$

**European Patent Office**

# EUROPEAN SEARCH REPORT

Application Number

EP 90 40 3361

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E,D | US-A-4 977 873 (CHERRY ET AL.)<br>* claims 1-10,20-28 *<br>--- | 1-21 | F02B19/12 |
| A | US-A-3 954 093 (HUGHES)<br>* column 2, line 49 - column 5, line 54 *<br>--- | 1,12,22 | |
| A | US-A-2 520 378 (T. VEIT)<br>* column 2, line 43 - column 3, line 2 *<br><br>----- | 1,12,22 | |
| | | | **TECHNICAL FIELDS SEARCHED (Int. Cl.5)**<br><br>F02B |

The present search report has been drawn up for all claims

| Place of search | Date of completion of the search | Examiner |
|---|---|---|
| THE HAGUE | 18 FEBRUARY 1992 | ALCONCHEL Y UNGRIA J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                

& : member of the same patent family, corresponding document

EPO FORM 1503 03.82 (P0401)